# EUROPEAN PATENT APPLICATION

(11) **EP 2 728 734 A1**
(43) Date of publication of application: **07.05.2014**
(21) Application number: 12191024.4
(22) Date of filing: 02.11.2012
(51) Int. Cl.: H02M 7/483, H02M 7/487, H02M 1/00

(54) **A three-level neutral-point-clamped inverter**

(71) Applicant: ABB Oy, 00380 Helsinki (FI)
(72) Inventor: Alahuhtala, Jarno, 00380 Helsinki (FI)
(74) Representative: Kolster Oy Ab

(57) **Abstract**

The present disclosure discloses a three-level neutral-point-clamped inverter, comprising a DC link and a plurality inverter legs. Each inverter leg comprises a first, second, third, and fourth semiconductor switch connected in series between the positive pole and the negative pole, an upper connection point between the first and the second semiconductor switch, a lower connection point between the third and the fourth semiconductor switch, an output between the second and the third semiconductor switch, a first rectifying means connected between the neutral point and the upper connection point, and a second rectifying means connected between the neutral point and the lower connection point. Each inverter leg further comprises a fifth semiconductor switch connected between the positive pole and the output, and a sixth semiconductor switch connected between the output and the negative pole.

## Description

### FIELD OF THE INVENTION

The present invention relates to inverter topologies, and particularly to high-efficiency three-level neutral-point-clamped inverter topologies.

### BACKGROUND INFORMATION

Neutral-point-clamped (NPC) inverters are commonly used in, for example, solar power applications.

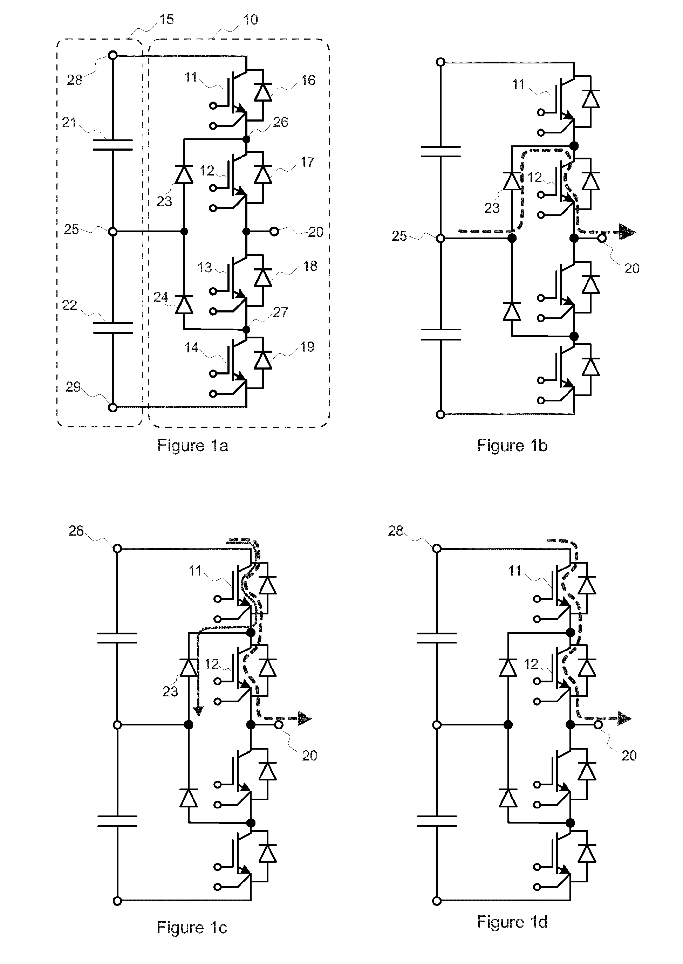

Figure 1a illustrates an exemplary implementation of an inverter leg of a conventional NPC inverter topology. In Figure 1a one inverter leg 10 is shown. In the inverter leg 10, four semiconductor switches 11 to 14 are connected in series between a positive pole 28 and a negative pole 29 of a DC link 15. In Figure 1a, the switches 11 to 14 are IGBTs. The switches 11 to 14 are coupled with antiparallel diodes 16 to 19, respectively. An output 20 of the inverter leg 10 is between switches 12 and 13. The DC link 15 comprises two capacitors 21 and 22. Two diodes 23 and 24 connect a neutral point 25 of the DC link 15 to a connection point 26 between the switches 11 and 12 and to a connection point 27 between 13 and 14.

In solar power applications, power is typically supplied to a power grid with a power factor close to one. When the power factor is one, the switches 11 and 14 in Figure 1a may experience a high level of losses. In addition to conducting state losses, the switches 11 and 14 may experience switching losses. In principle, a rating of a component may directly affect its switching losses. A component with a higher rating requires a higher switching energy. In Figure 1a, magnitude of switching losses may depend on the sizes and types of the diodes 23 and 24 and the switches 11 and 14.

During a process of turning the switch 11 on, a reverse recovery current of the diode 23 may produce significant additional stress to the switch 11. Figures 1b to 1d illustrate an exemplary switching situation of the inverter in Figure 1a.

Initially, in Figure 1b, the output 20 is connected to the neutral point 25, and a current (a dashed line) flows through the diode 23 and the switch 12.

Then, in Figure 1c, the switch 11 is turned on and the current commutates to flow through the switches 11 and 12. A reverse recovery current (dotted line) of the diode 23 also flows through the switch 11.

In Figure 1d, the reverse recovery current has come to an end, the output 20 is connected to the DC link positive pole 28, and the current flows through the switches 11 and 12, which are in a fully conductive state.

Since the switch 11 and 14 in Figure 1a are subject to both switching losses and conductive state losses, their dimensioning may have to be a compromise in respect of the die size of the switch. A larger die may lead to higher switching losses while a smaller die may result in higher conductive losses. The total energy loss may put a limit for the minimum die size as the energy loss distributed on the die raises the operating temperature of the switch. For silicon-based components, a maximum operating junction temperature is typically 125, 150, or even 175 °C.

NPC inverters, such as that illustrated in Figure 1a, typically have lower switching losses compared with conventional two-level inverters because the blocking voltage rating of the switches and rectifiers in NPC inverters is lower than in two-level inverters. On the other hand, conductive losses of an NPC inverter are higher than those of a two-level inverter since the NPC inverter always has two semiconductor components in the path of current.

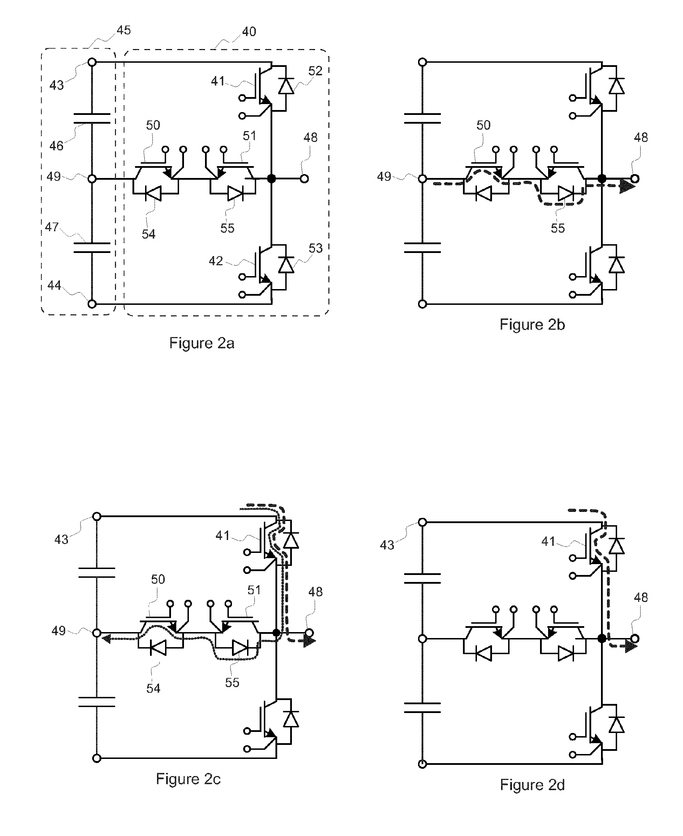

Figure 2a illustrates an example of a T-type NPC inverter topology. In an inverter leg 40 of Figure 2a, two semiconductor switches 41 and 42 are connected in series between the positive 43 and negative pole 44 of a DC link 45. The DC link 45 comprises two capacitors 46 and 47. An output 48 of the inverter leg 40 is between the switches 41 and 42. The output 48 is connected to a neutral point 49 of the DC link 45 through a series connection of two switches 50 and 51, wherein the emitters of the switches 50 and 51 are connected to each other. The switches 41, 42, 50, and 51 are coupled with antiparallel diodes 52 to 55, respectively.

Figures 2b to 2d illustrate an exemplary switching situation of the inverter in Figure 2a. Initially, in Figure 2b, the output 48 is connected to the neutral point 49, and a current (dashed line) flows through the diode 55 and the switch 50.

Then, in Figure 2c, the switch 41 is turned on and the current starts to flow through the switch 41. However, a reverse recovery current (dotted line) of the diode 55 also flows through the switch 41.

In Figure 2d, the reverse recovery current has come to an end, the output 48 is connected to the DC link positive pole 43, and the switch T1 is in a fully conductive state.

The neutral point connection in the inverter leg 40 of Figure 2a may be implemented by using components similar to those in Figure 1a. Connections to DC link positive pole 43 and negative pole 44 may, however, require switches which have higher reverse voltage ratings. In the case of a 1 000-V DC link, these switches may, for example, have to have a rating of 1 200 V.

Compared with the NPC inverter topology of Figure 1a, the inverter topology of Figure 2a has lower conductive losses. In addition, gate control in Figure 2a can be implemented in only three separate potentials. On the other hand, the switching losses may be higher than those of the conventional NPC inverter of Figure 1a because of the higher voltage rating requirement for the switches 41 and 42. At the same time, a reverse recovery current of diodes 54 and 55 increase turn-on switching losses of the switches 41 and 42.

### BRIEF DISCLOSURE

An object of the present invention is to provide an inverter topology and a method for controlling the topology so as to alleviate the above disadvantages. The objects of the invention are achieved by a topology and a method which are characterized by what is stated in the independent claims. Preferred embodiments of the invention are disclosed in the dependent claims.

Losses can be reduced by using a disclosed three-level neutral-point-clamped inverter topology. An inverter according to the disclosed topology comprises a DC link and a plurality of inverter legs in which two parallel routes for current are provided. Instead of having to compromise between conductive state losses and switching losses, one of the routes can be optimised for switching and the other for the conductive state.

As the components in the main path for current can be separately optimised, higher efficiency can be achieved. Further, cost-efficiency can be improved.

### BRIEF DESCRIPTION OF THE DRAWINGS

In the following the invention will be described in greater detail by means of preferred embodiments with reference to the attached drawings, in which
Figures 1a to 1d illustrate an exemplary implementation and exemplary operation of an inverter leg of a conventional NPC inverter topology;
Figures 2a to 2d illustrate an exemplary implementation and exemplary operation of an inverter leg of a T-type NPC inverter topology;
Figures 3a to 3e illustrate an exemplary implementation and exemplary operation of the disclosed inverter topology;
Figure 4 illustrates an exemplary solar power arrangement where the disclosed topology is used; and
Figure 5 illustrates another exemplary implementation of the disclosed inverter topology;

### DETAILED DISCLOSURE

In the topologies of Figures 1 and 2, the switching devices are very unevenly stressed. In Figure 1a, the switches 11 and 14 have significantly higher stress than other switching components. In Figure 2a, the switches 41 and 42 have significantly higher stress than other switching components.

Further, in both topologies of Figures 1a and 2a, the above-mentioned switches experience both switching losses and conductive state losses. Reducing one type of losses in a switch typically results in an increase in the other. Thus, selection of the above mentioned switches in Figures 1a or 2a may have to be a compromise between switching losses and conductive state losses.

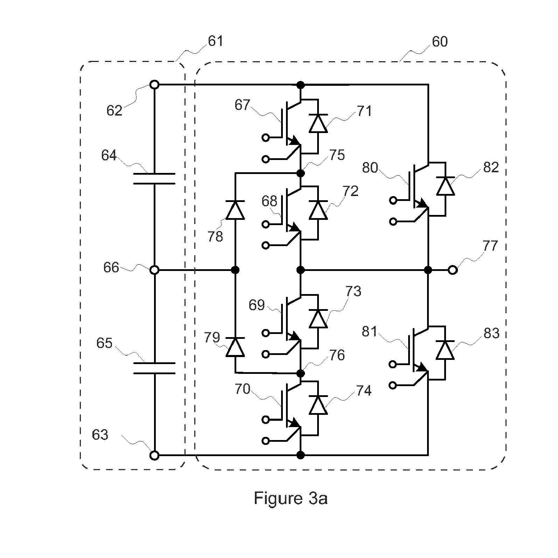

This disclosure discloses a three-level neutral-point-clamped inverter topology which may be used for implementing very high-efficiency inverters. An inverter according to the disclosed topology comprises a DC link and a plurality of inverter legs in which two parallel routes for current are provided. Instead of having to compromise between conductive state losses and switching losses, one of the routes can be optimised for switching situations and the other for the conductive state. Figure 3a illustrates an exemplary implementation of an inverter leg according to the disclosed inverter topology. In Figure 3a, one inverter leg 60 and a DC link 61 are shown. A three-level neutral-point-clamped inverter bridge can be built out of a plurality of inverter legs 60 of Figure 3a. For example, by using three inverter legs 60, a three-phase three-level neutral-point-clamped inverter can be achieved.

The DC link 61 comprises a positive pole 62, a negative pole 63, two capacitor units 64 and 65 in series between the positive pole 62 and the negative pole 63, and a neutral point 66 between the capacitor units 64 and 65.

The inverter leg 60 in Figure 3a comprises a first, second, third, and fourth semiconductor switch 67 to 70 connected in series between the positive pole 62 and the negative pole 63. In Figure 3a, the four semiconductor switches 67 to 70 are IGBTs. The IGBTs 67 to 70 comprise antiparallel diodes 71 to 74.

The inverter leg 60 in Figure 3a has an upper connection point 75 between the first IGBT 67 and the second IGBT 68, a lower connection point 76 between the third IGBT 69 and the fourth IGBT 70, and an output 77 between the second IGBT 68 and the third IGBT 69.

In Figure 3a, a first diode 78 acting as first rectifying means is connected between the neutral point 66 and the upper connection point 75, allowing a flow of current from the neutral point 66 to the upper connection point 75. A second diode 79 acting as second rectifying means is connected between the neutral point 66 and the lower connection point 76, allowing a flow of current from the lower connection point 76 to the neutral point 66.

The inverter leg in Figure 3a further comprises a fifth semiconductor switch 80 connected between the positive pole 62 and the output 77, and a sixth semiconductor switch 81 connected between the output 77 and the negative pole 63.

In Figure 3a, the fifth and sixth switch 80 and 81 are IGBTs with optional antiparallel diodes 82 and 83, respectively. The fifth IGBT 80 and the sixth IGBT 81 provide parallel routes for current in respect of the routes provided by the first IGBT 67 and the fourth IGBT 70. The antiparallel diodes 82 and 83 in Figure 3a may also be omitted.

The inverter leg in Figure 3a may, for example, be controlled in the following manner. In order to switch from a connection between the output 77 of the inverter leg 60 and the neutral point 66 to a connection between the output 77 and the positive pole 62 of the DC link 61, the first IGBT 67 may first be turned on, and then the fifth IGBT 82 may be turned on. In order to connect the output 77 to the negative pole 63 of the DC link 61, the fourth IGBT 70 may first be turned on, and then the IGBT 83 device may be turned on.

When connecting the output back to the neutral point 66 of the DC link 61, the same switches may be turned off in a reverse order. For example, in order to connect the output 77 to the neutral point 66 after a connection to the positive pole 62, the fifth IGBT 82 may first be turned off, and then the first IGBT 67 may be turned off. In order to connect the output 77 to the neutral point 66 after a connection to negative pole 63, the sixth IGBT 83 may first be turned off, and then the fourth IGBT 70 may be turned off.

Switching behaviour of the topology in Figure 3a resembles in some aspects the NPC topology of Figure 1a. Behaviour in the conducting state, however, resembles more the behaviour of the T-type NPC topology of Figure 2a.

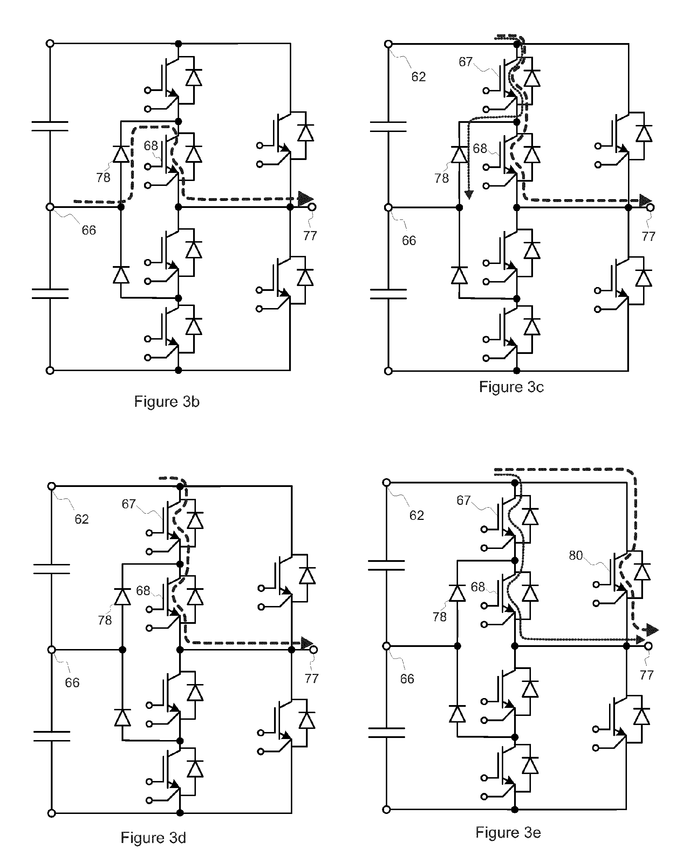

Figures 3b to 3e illustrate operation of the topology of Figure 3 in an exemplary switching situation similar to that disclosed in Figures 1b to 1d and 2b to 2d.

In Figure 3b, the output 77 of the inverter leg 60 is connected to the neutral point 66 through the first diode 78 and the second IGBT 68, and a current (dashed line) flows through them.

Then, in Figure 3c, the switch 67 is turned on in order to connect the output 77 to the positive pole 62, and the current commutates from the first diode 78 to the first IGBT 67. The commutation causes a reverse recovery current (dotted line) through the first IGBT 67, which is in the process of turning on.

In Figure 3d, the reverse recovery current has come to an end. The first IGBT 67 and the second IGBT 68 form a path for current between the positive pole 62 and the output 77.

Finally, in Figure 3e, the fifth IGBT 80 is turned on. A large majority (dashed line) of the current commutates mostly to flow through the fifth IGBT 80. Only a very small portion (dashed line) flows through the first IGBT 67 and the second IGBT 68. As a result, conducting state losses of the first IGBT 67 and second IGBT 68 are only minimal.

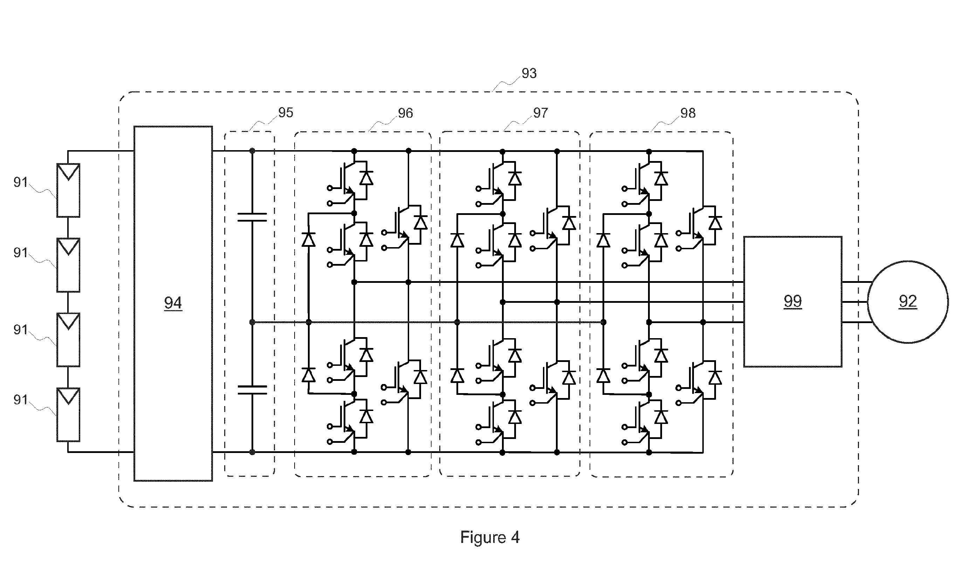

When connecting the output 77 back to the neutral point 66 after it has been connected to the positive pole 62, the IGBTs 67 and 80 can be switched off in a reverse order to that disclosed in Figures 4b to 4e. Corresponding sequences can be performed with the fourth IGBT 70 and sixth IGBT 81 when connecting to or disconnecting from the negative pole 63.

The fifth IGBT 80 and sixth IGBT 81 in Figure 3a can be switched at practically zero voltage. As a result, switching losses remain very small. Thus, the fifth IGBT 80 and sixth IGBT 81 can be adapted for minimal conductive state losses. In other words, they can be selected such that they have as low conductive losses as possible. For example, a slow IGBT having a low forward voltage drop *v*_{*ce*(*if*)} can be used as the fifth and sixth switch.

As a large majority of current flows through the fifth IGBT 80 and sixth IGBT 81 after commutation, the first IGBT 67 and fourth IGBT 70 switch experience almost solely switching losses. Thus, the first IGBT 67 and fourth IGBT 70 can be adapted for minimal switching losses. In other words, they can be selected such that their switching losses are as low as possible. Instead of using components with a larger die capable of tolerating the conductive state losses, the first and the fourth switch can be very small and fast components. Small MOSFETs may also be used in place of the first IGBT 67 and fourth IGBT 68 while the diodes 78 and 79 may be silicon carbide Schottky diodes.

Further, control of the fifth IGBT 80 and sixth IGBT 81 in Figure 3a can be coupled with the control of the first IGBT 67 and fourth IGBT 70, respectively. For example, there may be a constant delay between turning on the first IGBT 67 and turning on the fifth IGBT 80. The same delay can then be used between a turn-off event of the fifth IGBT 80 and a turn-off event of the first IGBT 67. Thus, the delay can be implemented by using a passive delay circuit.

For example, the first IGBT 67 and fifth IGBT 80 may be configured to be controlled on the basis of one control signal, and the inverter may comprise a passive delay circuit for generating a delay between turn-on and turn-off events of the first IGBT 67 and fifth IGBT 80. The fourth IGBT 70 and the sixth IGBT 81 switch may be configured to be controlled on the basis of one control signal, and the inverter may comprise a passive delay circuit for generating a delay between turn-on and turn-off events of the fourth IGBT 70 and the sixth IGBT 81.

A gate driver for the fifth IGBT 80 may be implemented at the same potential as a gate driver for the second IGBT 68, and a gate driver for the sixth IGBT 81 is implemented at the same potential as a gate driver for the fourth IGBT 70.

Since the fifth IGBT 80 and the sixth IGBT 81 in Figure 3a can be switched with very low losses, commutation between first IGBT 67 and the fifth IGBT 80 and commutation between the fourth IGBT 68 and sixth IGBT 81 can be slow. Slow commutation can reduce the disadvantageous effect that stray inductances between the collectors of the first and the fifth switch and between the emitters of the fourth and the sixth switch may have. Slow commutation may also allow implementations based on discrete components.

The conductive state losses of the second IGBT 68 and third IGBT 69 are comparable with the topology of Figure 2a since the second IGBT 68 and third IGBT 69 are in the conducting state only part of the time when connecting to a pole 62 or 63 of the DC link 61.

As the disclosed inverter topology comprises more components than, for example, the topologies of Figures 1a or 2a, heat induced by the losses can be more easily distributed over a cooling element cooling an inverter implementing the disclosed topology.

The disclosed topology can, for example, be applied to a single-phase inverter or to a three-phase inverter. In a three-phase implementation of the disclosed topology, a three-wire implementation or a four-wire implementation can be used in the connection between the inverter and a load. The load may, for example, be a power grid into which the inverter supplies power from a power source, such as a solar power generator.

Figure 4 illustrates an exemplary solar power arrangement where the disclosed topology is used. In the arrangement, an array of solar panels 91 is connected to a power grid 92 through a frequency converter 93. The frequency converter 93 comprises a supply unit 94 which converts the power produced by the solar panels 91 to a suitable form to be fed to a DC link 95 of the frequency converter 93.

The frequency converter 93 further comprises three inverter legs 96 to 98 according to the disclosed topology. The inverter legs 96 to 98 form a three-level three-phase inverter bridge. The outputs of the inverter legs 96 to 98 are connected to the power grid through an output filter 99. The filter 99 may, for example, be an LCL filter.

Although the previous examples and figures disclose inverter legs comprising only IGBTs, other semiconductor switches may also be used. All or part of the semiconductor switches may, for example be MOSFETs. In Figure 3a to 3e, diodes 78 and 79 are used as the first and the second rectifying means. However, the first and second rectifying means may also be active rectifying means implemented as semiconductor switches.

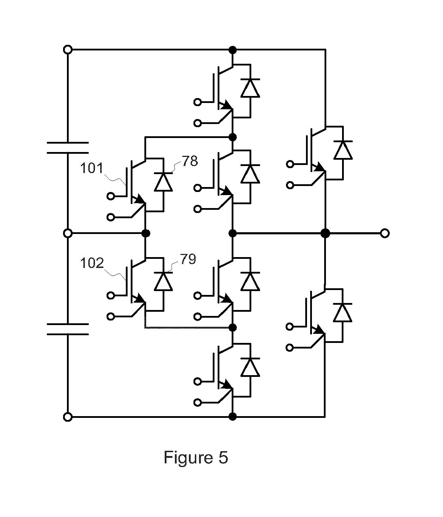

Figure 5 illustrates another exemplary implementation of the disclosed topology where the first and the second rectifying means are coupled with parallel semiconductor switches. Except for IGBTs 101 and 102 parallel to the diodes 78 and 79 of Figure 3a, the inverter leg in Figure 5 may be the same as in Figure 3a.

It will be obvious to a person skilled in the art that the inventive concept can be implemented in various ways. The invention and its embodiments are not limited to the examples described above but may vary within the scope of the claims.

## Claims

1. A three-level neutral-point-clamped inverter, wherein the inverter comprises
a DC link (61) comprising a positive pole (62), a negative pole (63), two capacitor units (64, 65) in series between the positive (62) and the negative pole (63), and a neutral point (66) between the capacitor units, and
a plurality of inverter legs (60), wherein each inverter leg (60) comprises
a first, second, third, and fourth semiconductor switch (67 to 70) connected in series between the positive pole (62) and the negative pole (63), each comprising an antiparallel diode (71 to 74),
an upper connection point (75) between the first and the second semiconductor switch (67, 68),
a lower connection point (76) between the third and the fourth semiconductor switch (69, 70),
an output (77) between the second and the third semiconductor switch (68, 69),
a first rectifying means (78) connected between the neutral point (66) and the upper connection point (75) and allowing a flow of current from the neutral point (66 to the upper connection point (75), and
a second rectifying means (79) connected between the neutral point (66) and the lower connection point (76) and allowing a flow of current from the lower connection point (76) to the neutral point (66), **characterized by** each inverter leg further comprising
a fifth semiconductor switch (82) connected between the positive pole (62) and the output (77), and
a sixth semiconductor switch (83) connected between the output (77) and the negative pole (63).

2. An inverter as claimed in claim 1, wherein the fifth and the sixth semiconductor switch (80, 81) are adapted for minimal conduction losses.

3. An inverter as claimed in claim 1 or 2, wherein the first and the fourth semiconductor switch (67, 70) are adapted for minimal switching losses.

4. An inverter as claimed in any one of the preceding claims, wherein the first and the second rectifying means (78, 79) are diodes.

5. An inverter as claimed in any one of claims 1 to 3, wherein the first and the second rectifying means (78, 79) are coupled with parallel semiconductor switches (101, 102).

6. An inverter as claimed in any one of the preceding claims, wherein the inverter is a three-phase inverter comprising three inverter legs.

7. An inverter as claimed in any one of the preceding claims, wherein a gate driver for the fifth switch (80) is implemented at the same potential as a gate driver for the second switch (68), and a gate driver for the sixth switch (81) is implemented at the same potential as a gate driver for the fourth switch (70).

8. An inverter as claimed in any one of the preceding claims, wherein
the first and the fifth (67, 80) switch are configured to be controlled on the basis of one control signal, and the inverter comprises a passive delay circuit for generating a delay between turn-on and turn-off events of the first and the fifth switch (67, 80), and
the fourth and the sixth (70, 81) switch are configured to be controlled on the basis of one control signal, and the inverter comprises a passive delay circuit for generating a delay between turn-on and turn-off events of the fourth and the sixth switch (70, 81).

9. A frequency converter comprising an inverter as claimed in any one of the previous claims.

10. A solar power arrangement comprising a frequency converter as claimed in claim 9.

11. A method for controlling an inverter as claimed in claim 1, wherein the method comprises,
for connecting the output of an inverter leg to the positive pole of the DC link, first turning the first switching device on, and then turning the fifth switching device on,
for connecting the output to the neutral point of the DC link after a connection to the positive pole, first turning the fifth switching device off, and then turning the first switching device off,
for connecting the output of an inverter leg to the negative pole of the DC link, first turning the fourth switching device on, and then turning the sixth switching device on, and
for connecting the output to the neutral point after a connection to the negative pole, first turning the sixth switching device off, and then turning the fourth switching device off.
